# EUROPEAN PATENT SPECIFICATION

(11) **EP 2 034 850 B1**
(45) Date of publication and mention of the grant of the patent: **05.04.2017**
(21) Application number: 06763540.9
(22) Date of filing: 06.06.2006
(51) Int. Cl.: A23C 19/09, A23C 19/05

(54) **NOVEL STARTER MEDIUM FOR CHEESE PRODUCTION**
NEUES STARTERMEDIUM FÜR DIE KÄSEPRODUKTION
NOUVEAU MILIEU DE FERMENTATION POUR LA PRODUCTION DE FROMAGES

(43) Date of publication of application: 18.03.2009
(73) Proprietor: DSM IP Assets B.V., 6411 TE Heerlen (NL)
(72) Inventor: BURNINGHAM, Gary K, Logan, Utah 84341 (US); ORME, Brian J, Logan/river Heights, Utah 84321 (US); THUNELL, Randall, Kirk, Logan, Utah 84321 (US)
(74) Representative: Kuster, Janaart Frans
(86) International application number: PCT/EP2006/062943
(87) International publication number: WO 2007/140815

(56) References cited:
- EP-A- 0 557 939
- WO-A-00/23517
- WO-A-02/091844
- DE-A1- 2 348 023
- DE-C- 876 187
- FR-A- 2 661 316
- US-A- 4 727 026
- US-A1- 2001 046 532
- US-B1- 6 258 389
- DATABASE WPI Section Ch, Week 198104 Derwent Publications Ltd., London, GB; Class D13, AN 1981-05145D XP002340955 & SU 734 272 B (BIOTECH RES INST) 15 May 1980 (1980-05-15)

## Description

### Field of the invention

This invention relates to a novel process for cheese making and a novel bacterial starter medium.

### Background of the invention

The addition of starter cultures to milk for the production of fermented dairy products, like cheese, has been known for decades. The first role of these lactic acid bacteria starter cultures is to rapidly acidify milk during the cheese-make process. After inoculation into cheese milk, starter bacteria ferment milk sugar into lactic acid, and lower milk pH. Most cheese varieties require considerable acidification of milk to achieve desired acid and moisture levels, as well as to achieve proper body and texture characteristics in the finished cheeses. The second function of starter cultures is to provide enzymes that mature the cheese during aging.

To create sufficient starter quantities for cheese making, starter cultures were traditionally propagated in vat-pasteurized skim or whole milk before inoculation into cheese milk. Such large volumes of starter culture are referred to as bulk starter. In milk starters, the culture was allowed to grow (ripen) until the pH of the medium became inhibitory to the culture, and cell growth stopped (usually below pH 4.9).

To achieve higher cell numbers and acid-producing activity from bulk starter, the cheese industry moved to propagating bulk starter cultures in media more nutritionally rich and complex than milk. These complex media were comprised of fermentable carbohydrates, buffer salts, metabolically available nitrogen sources (e.g. proteins, peptides, amino acids), vitamins, minerals, and other growth factors that allowed optimum cell growth and acid-producing activity for cheese making. By controlling the pH of the starter medium in an optimum range by addition of food-grade caustic via external pH-control instrumentation, or by internal pH-control through inclusion of buffer salts in the starter medium, cell numbers were boosted twenty to fifty times higher than when grown in milk alone. In addition to higher cell numbers, pH-controlled starter also exhibited higher acid-producing activity than milk-grown starter cultures. The amount of pH controlled starter typically needed was less than that required when cultures were grown on pasteurized milk.

Examples of ingredients used in production of a bulk starter medium for lactic acid producing bacteria are:
- Carbon source (carbohydrate): in general simple sugars like lactose, maltose, sucrose, and glucose.
- Nitrogen source (proteins and amino acids): such as milk protein, whey protein, casein hydrolysates, and autolyzed yeast extracts.
- Vitamins and minerals: such as provided by autolyzed yeast extract, and corn steep liquor.
- Phage inhibitory agents: such as chelating agents like phosphates and citrates.
- Antioxidants such as ascorbic acid and ferrous sulfate.
- Neutralizers (pH conditioners or buffers) such as phosphates, citrates, hydroxides, and caustic oxides.

Most commercial bulk starter media are optimized to obtain the most effective starters. Although starter medium components are also added to milk via the starter culture in the process of cheese production, less attention has been given to the effects of these medium components in the cheese making process, or in the final cheese. Possible positive effects of these solids additions have usually been ignored. However, in the dairy industry there is always a need for improvement, particularly for example, in improvement of cheese quality (e.g. flavor, texture, shelf life, functionality), or in yield improvement.

Neutralization of acid production in bulk starter may be done by external addition of chemical neutralizers (external buffering) during culture growth, or by including buffer salts in the medium formulation (internal buffering). Neutralizers may be added as solid ingredients or dry, as a part of a reconstitutable starter medium, or as a liquid (as in aqueous ammonia) to liquid or previously reconstituted starter media.

Buffer salts that can be used to control the pH in the medium during growth of the starter culture are usually present as solids which slowly dissolve during the growth of the starter culture.

It is important to keep the low soluble buffer particles suspended and dispersed. If the buffer salts settle to the bottle of the starter tank, they can react and form a solid mass, or "brick" of salts on the bottom of the starter tank. If the settling is significant, it could require someone to climb into the starter tank and chip away the sediment.

US2001/0046532 A1 and US 6,259,389 B1 disclose a method for preparing Mozzarella cheese wherein a culture medium comprising e.g. milk, water, a non-ionic thickener such as modified food starch (1-4%), phosphates and citrate is fermented with lactic acid bacteria. The material is then used for inoculating milk which is further processed to give cheese.

### Summary of the present invention

The present inventors have found that certain components of bulk starter media can improve the bulk starter phase as well as improve the cheese making process and the final product.

It is found that the presence of potato starch significantly improves the dispersion and suspension of buffer salts in the medium in which the starter culture is grown.

Accordingly, the invention provides, in a first aspect, a process comprising growing a starter culture of lactic acid bacteria in a liquid medium comprising buffer salts, wherein the liquid medium contains potato starch at a concentration from 10-120 g/l.

The present invention further provides a novel starter medium, which includes potato starch comprised of particles which are preferably smaller than natural starch granules. This starch is advantageously used for improved dispersion of [the buffer salts in the bulk starter processes as well as contributing to improved growth of cultures used in cheese making. Some nitrogenous substances in starch, such as proteins and amino acids, can be used as a nitrogen source for starter cultures, however, the primary function of the starch is to keep buffers salts and other insoluble materials in suspension.

According to a further aspect of the invention, potato starch is incorporated into the cheese matrix, improving cheese texture and functionality, etc. A good example of an obtained improvement is in Cottage Cheese manufacture, where dry curd is subsequently mixed with a "stabilized" cream plus milk-solids dressing. Incorporation of potato starch into the curd matrix, rather than just being included as an ingredient in a "stabilized" cream dressing, is found to be very advantageous. Incorporation of the starch improves the firmness, mouth feel and "meaty texture" of the Cottage Cheese and results in an excellent product texture. We also found that this invention improves and extends the shelf life of the finished Cottage Cheese by inclusion of potato starch in Cottage Cheese curd when good cheese manufacturing procedures are followed. Because of incorporation of potato starch into the cheese curd matrix, the water-binding capacity of the cheese matrix is increased. This novel advantage allows or provides changes in the cheese manufacturing process to increase the moisture content of all types of cheese without adversely affecting cheese body and texture. With starch-bound water in the cheese matrix, as opposed to free moisture, the curd matrix is firmer with
more moisture contained therein. This is an improvement to the current cheese processes in that cheese products are stabilized throughout the product, rather than by external treatment after cheese making is completed, as in the formulation of cottage cheese dressings with hydrocolloid or starch stabilizers. This incorporation of starch into the curd improves functional characteristics and curd texture. Shelf life, or the ability to hold cheese inventory for extended periods of time, is also enhanced by this invention compared to cheeses of similar moisture content.

### Detailed description of the invention

The invention provides a process comprising growing a starter culture in a liquid medium comprising buffer salts, wherein the liquid medium comprises potato starch at a concentration from 10 to 120 g/liter. The presence of potato starch is found to result in a improved dispersion and suspension of [the buffer salts].

It is found that dispersion is further improved by using increased concentrations of starch in the liquid medium. The potato starch is present in the liquid medium at a concentration from 10 to 120 g/liter, preferably from 20 to 80 g/liter, more preferably from 40 to 60 g/liter of starch may be present in the liquid medium.

The starch may have any suitable size distribution. It is found that reducing the mean particle size of the starch (for instance by milling) can improve the dispersion of solids, such as buffer salts. Preferably, the starch has a mean particle size of less than 300 µm, preferably of less than 200 µm. The starch may have a mean particle size of above 5 µm, for instance above 10 µm, for instance above 50 µm, for instance above 100 µm.

Preferably, the buffer salts are phosphate salts and/or citrate salts. Phosphate salts may be present in the form of the mono-, di- and/or tri- basic salt of phosphoric acid. Citrate salts may be present in the form of the mono-, di- and/or tri- basic salt of citric acid. The buffer salts may be sodium salts, potassium salts, and magnesium salts, preferably of phosphoric acid or citric acid. Combinations thereof are also possible.

Buffer salts may be present in the liquid medium at any suitable concentration. Preferably, from 5 to 90 g/liter of buffer salts are present in the liquid medium, more preferably from 15 to 70 g/liter.

Advantageously, the buffer salts are present in the liquid medium as solids. The buffer salts that are present as solids may dissolve during growth of the starter culture.

Growing of the starter culture is preferably effected at a temperature between 20 and 45 ºC, for instance at a temperature between 20 and 35 ºC or at a temperature between 35 and 45 ºC.

As starter culture may be used any lactic acid bacteria, for instance *Lactococcus* (e.g. *Lactococcus lactis,* subsp. *lactis* and *Lactococcus lactis* subsp. *cremoris.*), *Streptococcus* (e.g. *Steptococcus thermophilus*), *Lactobacillus, Leuconostoc, Weissella, Propionibacterium, Bifidobacterium, Brevibacterium, Enterococcus,* or *Pediococus*

In a preferred embodiment of the process according to the invention, the concentration of lactic acid bacteria in the liquid medium increases from a value of between 1 x 10⁵ and 1 x 10⁷ cfu/ml to a value greater than 1 x 10⁸ cfu/ml, preferably to a value of between 5 x 10⁸ and 5 x 10¹⁰ cfu/ml.

In a preferred embodiment of the invention, the liquid medium has a pH of between 4 and 7.5. Preferably, the pH of the medium decreases from a value of between 6 and 7.4 to a value of below 5.5, preferably to a value between 4.2 and 5.4 during the growth of the culture.

The liquid medium may comprise further (bulk starter medium) ingredients. Examples are:
(i) A carbon source (carbohydrate), for instance sugar such as lactose, maltose, sucrose, and glucose; and/or
(ii) A nitrogen source (e.g. proteins and/or amino acids), for instance milk protein, whey protein, casein hydrolysates, or (autolyzed) yeast extract; and/or
(iii) Vitamins and/or minerals (such as provided by autolyzed yeast extract, and corn steep liquor; and/or
(iv) Phage inhibitory agents, for instance chelating agents like phosphates and citrates; and/or
(v) Antioxidants, for instance ascorbic acid and/or ferrous sulfate and/or
(vi) Neutralizers ((pH conditioners or buffers), for instance phosphates, citrates, hydroxides or caustic oxides.

Growing of the culture may be effected in the presence of mechanical agitation. However, we found that growing of the culture may also be effected in the absence of agitation. Due to the excellent dispersion and suspension provided by the invention, mechanical agitation is obviated.

The starter culture grown (also referred to as ripened starter culture) in the process according to the invention may be added to milk to prepare cheese. Preferably, the liquid medium comprising the starter culture grown and starch is added to milk.

Preferably, the starter culture grown according to the invention and to be added to the milk has a concentration of lactic acid bacteria 1 x 10⁸ cfu/ml, preferably at least 5 x 10⁸, for instance between 5 x 10⁸ and 5 x 10¹⁰ cfu/ml.

Preferably, the starter culture grown according to the invention and to be added to the milk has a pH of below 5.5, for instance between 4.2 and 5.4.

Preferably, the addition of the starter culture obtained by the process according to the invention results in a concentration of starch in the milk of at least 0.01 wt.%, preferably at least 0.025 wt.%, preferably at least 0.05 wt.%. The milk obtained may for instance comprise between 0.01 and 0.5 wt.%, preferably between 0.025 and 0.2 wt.%, more preferably between 0.05 and 0.15 wt.% of starch.

The invention provides, in a further aspect, a process for the production of cheese, said process comprising providing milk comprising starch, preferably at least 0.01 wt.%, preferably at least 0.025 wt.%, preferably at least 0.05 wt.%. The milk may for instance comprise between 0.01 and 0.5 wt.%, preferably between 0.025 and 0.2 wt.%, more preferably between 0.05 and 0.15 wt.% of starch.

We found, as will be disclosed in more detail hereinafter, that potato starch has unexpected benefits when incorporated into cheese according to the invention. It is found that the use of potato starch can improve the firmness of the cheese.

The advantages are particularly pronounced if the cheese has a relatively high moisture content. In a preferred embodiment of the invention, the cheese has a moisture content of at least 40 wt.%, for instance between 40 and 60 wt.%. In a preferred embodiment, the cheese is cottage cheese. In another preferred embodiment, the cheese is mozzarella.

The milk may be processed into cheese in any known manner. The milk may be coagulated in the presence of a coagulating enzyme, resulting in coagulating of the milk, wherein a curd is obtained. The curd may be processed into cheese.

As coagulating enzyme may be used any enzyme capable of inducing coagulation of milk, such as enzymes having specificity for the peptide bond between residue 105 phenylalanine and residue 106 methionine or a bond adjacent to that in kappa-casein.

The invention further provides a cheese obtainable by the process according to the process according to the invention.

Potato starch particles can be advantageously used to stabilize suspensions of, buffer salts present as solid or dispersed particles in a bulk starter medium. Preferably, for dairy applications, the starch is one that can also contribute to ionic cross-linking with casein proteins in the cheese matrix during the cheese making process. Potato starch is the preferred starch for this application because it has this functional characteristic. Other starches can also be used to stabilize starter suspensions, as long as they are able to keep dispersed compounds such as buffer salts in suspension during the bulk culture process and/or are able to improve the texture and stability of the cheese. For example, potato starch particles can be used in a bulk starter medium of the present invention.

A preferred potato starch is gelatinized, for instance partly or fully gelatinized. Another preferred characteristic is that the potato starch has an average particle size smaller than the natural starch granule.

We have found that using milled potato starch surprisingly results in an improvement of the final cheese, along with improved suspension in the fluid cheese milk before coagulation.

The gelatinized potato starch surprisingly shows a strong contribution to the improvement of the cheese matrix and an increase in moisture content of the final cheese at the same time. High moisture cheeses such as Cottage Cheese showed an increased firmness and meatiness of the cheese curd matrix.

For example, in the production of Cottage Cheese, we have found an increase of moisture content of 0.5 to 1% or higher using potato starch.

An additional advantage is the improved shelf life of cheeses produced using this invention.

A possible explanation could be that the incorporation of potato starch particles results in a cheese wherein the present water is more tightly bound, reducing water activity in the cheese. Because of the reduction of free water in the cheese, the keeping qualities of the cheese are increased. Although this explanation is believed to be true, the present invention is not limited or restricted to this explanation. In case another explanation would be valid, the present results and claims are still held to be valid.

Also the cheese produced using the bulk starter medium of the invention showed a better texture in the sense of firmness and mouth-feel.

By average (or mean) particle size is meant the average of the diameter of the particles as measured by a light beam particle analyzer such as an Insitec Inline Particle Analyzer.

The present invention is described in more detail using potato starch as an example.

By starch particles are meant granules or milled granules, as well as flocks or flakes, or any other form of starch particles in any size.

Potato granules can be produced by a wet milling (rasping process). First the potatoes are washed, peeled, sliced and cooked. After mashing, the product is dried and screened to obtain a powder.

In general the skin of the potato is not used for the final product.
Potato flakes are produced in a similar way to granules, except that a number of the cells are ruptured during processing. The potato cells form (dry) "sheets" in this process, and are often hammer milled to reduce the particle size. Potato flakes produced in this way are stored in a dry state at about 4 to 8% moisture. The above-mentioned granules can also be stored in a dry state at about 4 to 8% moisture.

Potato starch is usually obtained by 'cold' extraction of potatoes in which the starch obtained is not gelatinized. When starch is used in the present invention, it should preferably be gelatinized before use, but can also be gelatinized as a part of the starter preparation process.

In case potato granules or other potato forms are used, especially starting from dry potato particles, the potato starch particles, if previously gelatinized, can be gelatinized again just before use, to obtain optimal functionality. The starch may also be gelatinized during a pasteurization step.

Before drying, the potato starch particles are swelled and heated to gelatinize. If dry particles are used, water has to be added to these particles. The conditions used to gelatinize the potato particles or other starch particles are appreciated by the skilled person in the art. We found that this gelatinization has a very positive effect on the behaviour of the starter in the starter medium as well as in the final cheese. After this gelatinization process the starch granules (particles) may be dried and milled. Preferably these gelatinized starch particles are dried before size reduction. By size reduction is meant herein any method, for example chemical or physical, to reduce the size of the gelatinized, partially gelatinized, or non-gelatinized starch particles. Physical treatment is the preferred process to reduce average particle size of the partially gelatinized particles. Wet or dry milling, homogenisation and comminuting are examples of size reduction processes. An example of such a process is described in US6,485,775 which is incorporated here by reference. The fine particles described in the above US patent are used as a fat substitute in cheese products such as processed cheese, cheese spreads etc. These fine particles can be used in the present invention whereby the function of these fine particles is novel and different as is explained throughout the present specification. In general the amounts of starch used in the above US patent will be higher than the amounts used in the present invention. In the above US patent granules are homogenized under pressure to reduce the size of granules before drying which is rather expressive. The starch particles used in the present invention are preferably dried hereafter the dried particles are milled. A positive benefit of the latter process is that the protein from the starch membrane is included in the starter medium. This added protein and other stimulants, may result in improved activity of the starter culture). The above US patent relates to the production of low fat and non-fat cheeses. The present invention relates to improvements in texture and functionality of full fat and low fat cheeses (example is Part-Skim Mozzarella). Advantageously milled potato starch particles of a mean particle size of less than 100 microns (1 micron = 10⁻⁶ meter) are used in the process above. More preferably the potato starch has a mean particle size of between 5 and 80 microns and most preferably a particle size of between 5 and 50 microns (µm).

The above described production processes for potato particles, or potato starch are known to the skilled person in the art. Many products of starch, potato starch granules or potato starch flakes are commercially available. Of course other production processes can also be used to produce these products.

By potato starch is meant potato starch extracted or purified from potato, as well as potato particles. These particles may be produced in gelatinized or partially gelatinized form using the processes described herein to result in potato flakes or potato granules. Potato consists of about 80 to 90% of carbohydrate and 10% of nitrogenous compounds, mostly proteins. 70 to 85% of the carbohydrate is starch. Potato starch is preferably in at least a partly gelatinized form when it is used according to the present invention. In general, potato particles are gelatinized during the production process, whereas starch produced in a 'cold' production process is subsequently gelatinized, if desired.

In general, from 10 to 120 g/liter preferably 20 to 80 g/l and more preferably from 40 to 60 g/liter of starch is used in the aqueous bulk starter processes of the present invention.

According to a further aspect of the present invention, the final cheese can be further improved by the addition of phosphate and/or divalent cations, for example sodium acid pyrophosphate (SAPP) and/or calcium chloride can be added to bulk starter, to improve the functionality of the starch.

According to another aspect of the present invention the phosphate and/or calcium and/or potato starch is added directly to cheese milk. This can be done simultaneously with the ripened starter culture or shortly before or after this addition. We have found that the phosphate and calcium addition with the potato starch results in improved curd matrix, possibly due to a better binding of the potato starch by calcium-phosphate cross-links between casein and the potato starch. This effect is further improved by the presence or addition of (extra) calcium for example in the form of a calcium chloride solution that can be added simultaneously with the phosphate. Negatively charged phosphates form ionic bonds with positively charged divalent cations like calcium to form a network of ionic cross-links. These links can be quite long, alternating phosphates and calcium ions, and even negatively charged citrate ions can participate, to bridge distances between phosphate moieties on caseins and as we have found - phosphate moieties on potato starch.

It is our theory that potato starch interaction (viz. the interaction of calcium with the phosphate groups in milk and potato starch) occurs in the form of potato starch-calcium-phosphate-calcium-protein ionic bonds which are formed in the curd matrix. So the curd matrix is improved by the presence of cross-linked starch as well as by cross-links between casein and the starch. Although this theory is believed to be true, the present invention is not limited or restricted to this theory. In case another theory would be valid, the present results and claims are still held to be valid.

As mentioned above, SAPP is a suitable phosphate species for this cross-linking. Other suitable phosphates that can be used in the present invention are hexa meta phosphates, tripolyphosphates, etc.

Calcium chloride is mentioned as a calcium source, which can be used in the present invention but other suitable sources of calcium can be any food grade soluble calcium salt.

As explained above the calcium and phosphate have a direct influence on the curd and on the final cheese.

The amounts, which have been added to give beneficial effects, can easily be determined by the skilled person in the art. The total amount that can preferably be added to milk for beneficial effect is between 0.001% and 0.2% (wt/wt calculated as phosphate), preferably between 0.01 and 0.1%, but addition of 0.05% is usually sufficient. Sodium Acid Pyrophosphate was the phosphate.

Calcium is already present in the milk. Calcium can be added to milk up to 0.02% (wt/wt calculated as anhydrous calcium chloride), but addition of up to 0.01% is preferred. Calcium chloride is preferred because of its solubility and because it can be added directly to the milk to form the phosphate - calcium bonds. If large amounts of pyrophosphates (or other phosphates) are added to the milk, either directly or through the starter, a concomitant amount of calcium chloride (or other calcium salts) can be added to the milk. For enzyme coagulated (renneted) cheeses, these phosphates might chelate some of the natural calcium in milk and weaken rennet curd strength without calcium addition. Calcium addition will reduce or eliminate this effect.

We have found that calcium and/or phosphates are advantageously added to the cheese milk, but preferably not simultaneously. However, we have found that addition of phosphate at the beginning of the bulk culture process at a concentration of, for example, 2.5 g/liter will inhibit starter culture growth. We have found that calcium is preferably added to the milk before the phosphate-containing starter is added. Higher levels of phosphate can also be added to starter after it is grown, without adversely affecting the culture.

An additional advantage of the use of the present milled potato starch in the bulk starter medium or as a direct additive to milk is that sedimentation of starch in the cheese vat is diminished compared to the use of the same starch having larger particles. In case of using phosphate and optionally calcium, this sedimentation is reduced even more. As described before, the use of the present milled potato starch results in an improved curd, and reduces sediment in the cheese vat. Potato starches were found to be better than other starches for suspension in milk. These factors also result in increased cheese production.

In view of the above, the invention further provides, in further aspects:
In a further aspect, the invention provides a composition comprising a potato starch at a concentration from 10 to 120 g/liter and pH-controlling buffer salts.

In one embodiment, the composition is in solid form and comprises less than 10% of water. Such composition can advantageously be used as an additive (pre-mix) to prepare a liquid medium for applying the process according to the invention.

In another embodiment, the composition is in aqueous form.

Preferably, the starch is a comminuted starch, for instance a milled starch. Preferably, the starch has a mean particle size of less than 300 µm, preferably of less than 200 µm.

Preferably, the composition further comprises at least one additional bulk starter medium ingredient or a bulk starter culture. The starter culture is preferably present in the form of a ripened starter culture.

In a further aspect, the invention provides a process to prepare a ripened starter culture, which comprises the use of potato starch, to grow the starter culture in a liquid medium. Preferably, the process comprises the use of buffer salts in the liquid medium.

In a preferred embodiment, the invention provides a process to produce cheese from cheese milk which comprises adding the composition to the cheese milk to prepare
the cheese. In a preferred embodiment, phosphate is added to the cheese milk. In another preferred embodiment, calcium is added to the cheese milk.

In a further aspect, the invention provides the use of phosphate in a cheese making process wherein the phosphate is used to benefit the ionic cross-link binding of cheese proteins and/or the starch present.

In a further aspect, the invention provides the use of calcium in a cheese making process wherein the phosphate is used to benefit the cross-link binding of the cheese proteins and/or the starch present.

In a further aspect, the invention provides the use of starch in a bulk culture medium for the dispersion of solids such as buffer salts in the bulk culture medium.

In a further aspect, the invention provides the use of potato starch in a cheese making process to increase the moisture content of the cheese.

In a further aspect, the invention provides the use of potato starch in a cheese making process to reduce the water activity of the cheese, or to increase water content of cheese without increasing water activity in the cheese.

In a further aspect, the invention provides the use of potato starch in a cheese making process to improve shelf life of the cheese.

In a further aspect, the invention provides the use of potato starch in a cheese making process to improve texture and functionality of a full-fat and Low Fat cheese.

Preferred features and characteristics of one aspect of the invention are equally applicable to another aspect *mutatis mutandis.*

The following examples are provided to merely illustrate the invention, and are not to be construed to be limiting.

### Example 1

100 pounds (45 kg) of a composition containing 40 wt.% of gelatinized food grade potato starch, magnesium phosphate buffer salts (30 wt.%), whey, autolyzed yeast extract, whey protein hydrolysate and minerals was mixed in 760 pounds (348kg) of lukewarm (50-80ºF = 10-27°C) water to a total solids level of 11.6 wt.%. The resulting medium contained 4.6 wt.% of potato starch and 3.5 wt.% of buffer salts. It was mixed vigorously, yet avoiding any excessive shearing action. The potato starch was commercially available and had a mean particle size above 300 microns. Agitation was continued to allow 15 minutes for the powder to completely disperse the powder in the water.

The initial pH upon mixing was between 6.40-6.80, with a T.A.(titratable acidity) of 0.60-1.20 when a sample was titrated to pH 8.30. Heating of the starter mixture was begun once the powder was completely dissolved. Then the medium was pasteurized at 165-175ºF (=74-79°C), for 30 to 45 minutes with constant agitation.

After pasteurization, the starter was rapidly cooled to the inoculation temperature for inoculation with mesophilic cultures at 80-82ºF (=27-28°C). It was inoculated with a mesophillic *Lactococcus* culture. Upon inoculation, the medium contained about 1·10⁶ cfu/ml of lactic acid bacteria. The medium was continually agitated at slow speed (about 16 rpm or less) during fermentation.

The starter medium was fully-grown in 12 hours, depending on temperature and inoculation rate. The fermentation was determined to be complete once the titratable acidity achieved a T.A of 2.90% or greater, corresponding to a pH of 5.40 or less. The medium then contained about 5·10⁹ cfu/ml of lactic acid bacteria. Cooling of the starter medium was started to maintain the best holdover activity.

When the starter culture was pumped from the starter tank, no sedimented buffer salts were found on the bottom of the tank.

When the experiment is repeated in the absence of starch, sedimentation of the buffer salts occurred.

### Example 2

Media were prepared and pasteurised in shake flasks (volume of liquid: 1 L) using the same procedure as in example 1. The concentration of potato starch was varied. The potato starch had mean particle size of 300 microns (measured by using a combination of a micron Alpine Jet Sieve and Insitec Inline Particle Analyzer). After pasteurisation the medium cooled to room temperature (20 ºC) and maintained at that temperature during a period of 2 hours in the absence of stirring. Then, buffer salt suspension was inspected visually. The height of the suspension was measured as a percentage of the total liquid height. Table 1 shows this height as a function of the concentration of potato starch.

**Table 1**

| example | Concentration of potato starch in the medium (wt.%) | Height of buffer salt suspension (%) |
|---|---|---|
| 2a | 0 | 16 |
| 2b | 1.15 | 32 |
| 2c | 2.3 | 58 |
| 2d | 3.45 | 81 |
| 2e | 4.6 | 92 |
| 2f | 4.6 (mean particle size 150 micron) | 100 |

This set of experiments clearly shows that buffer salt dispersion is strongly improved due to the presence of potato starch.

In a further experiment (2f), the potato starch was milled to obtain a mean particle size of 150 microns instead of 300 microns. Suspension height was 100%. Buffer salts remained even completely suspended after 7 days of static storage. This shows that the reduction of the particles size improves the dispersability even further.

### Example 3

### Preparation of cottage cheese.

### Metric Starter Inoculation :

160 liter of a ripened starter-culture was added to a cheese vat that was filled with 8000 liters of cheese milk. This equals a 2.0% inoculation rate.

### Cottage Cheese Short-Set Method :

Step 1. 2% mesophilic starter was added to pasteurized skim milk at 90°F (32°C) followed by 10 to 15 minutes stirring.
Step 2. Coagulant (Single Strength) at the rate of 0.5 to 1.0 milliliters which was diluted 20X in non-chlorinated water per 1,000 pounds (454kg) of skim milk was added at the time the starter is added.
Step 3. The cutting time was determined using pH measurements of the coagulated skim milk, the A-C test, Snake Test or titratable acidity of the milk. Optimum values for pH at cutting differed depending on the amount of coagulant used, solids content and the heat treatment of the skim milk. As a starting point, a pH of 4.80 in the curd or a titratable acidity of 0.45% of the coagulated skim milk was used for normal skim milk.
Step 4. After cutting, the curd was left undisturbed for 15 to 20 minutes; healing.
Step 5. The temperature of the heating whey was raised at a rate such that the temperature of the vat raised 1°F (5/9°C) each 5 minutes for the first 30 minutes; after this the rate was doubled until a final cooking temperature of 127°F (53°) to 135°F (57°C) is reached about two hours later. Stirring should be gentle to prevent shattering, yet frequent enough to prevent matting. If both matting and shattering occur, the rate of heating is probably too fast.
Step 6. The proper firmness was reached after holding 15 to 20 minutes at 127°F to 135°F (53-57°C). The curd was checked frequently during cooking to ensure that it does not become too firm. The pH or acidity at cutting is the chief factor influencing the firmness of curd at the final cooking temperature. If curd was consistently too firm at 127°F to 135°F (53-57°C), the cutting acidity was raised, or the cutting pH was lowered slightly. If curd was consistently too soft at 127°F to 135°F (53-57°C), the cutting acidity was lowered, or the cutting pH was raised slightly. The firmness of curd was judged by cooling a handful of curd in water to 60°F to 70°F (16-21 °C).
Step 7. After cooking, the whey was drained until the whey first disappeared below the surface of the curd mass, and then the first wash water was added. Two wash waters were used, the first wash was at 60°F (16°C) to and the second at 48°F (9°C). The curd was remained in contact with each wash for 15 to 20 minutes, and was stirred frequently but gently.
Step 8. CREAMING and PACKAGING

The creaming operation may be carried out in a variety of ways: in special creaming vats, in mixers or in the vat used for making the curd; each method has its own particular merits. The amount of cream dressing added varies depending on its fat content (10-20%) and the amount of fat in the creamed curd; *full fat* creamed cottage cheese contains at least 4% fat; low fat creamed Cottage cheese contains 2% to 1% fat. All cream dressing were pasteurized at 170°F to 175°F (77-79°C) for 16 seconds and homogenized at 1,500-2,500 p.s.i. (=10.3 - 17.2MPa). Stabilizers and nonfat dry milk were added, if necessary, before pasteurization to control viscosity and total solids.

The procedures for producing Cottage Cheese are also described in: *PFIZER Cheese Monographs, Volume III, by Douglas B. Emmons, Ph.D. and Stewart L. Tuckley, Ph.D.,for example pgs. 18 to 20 and 22.*

Three different bulk starters were prepared for Cottage Cheese manufacture. Bulk Starter A, an internal pH-controlled starter medium containing no starch, and was reconstituted to a solids level of 4.0%, and was used as a control. Bulk Starter B was an internal pH-controlled starter medium containing potato starch (4.6% in liquid), having an average starch granule size of 300 microns. Bulk Starter C an internal pH-controlled starter medium containing an the same amount of potato starch as Bulk Starter B, but having an average starch particle size of 35 microns. Bulk starters B and C were prepared as described in Example 1.

Particle size reduction was achieved by processed potato starch through a stainless steel 28 inch Air Swept Pulverizer to reduce particle size of starch granules. This involves fluidizing the starch granules in an air stream to impact against a hammer mill for impact pulverizing.

Cottage Cheese was prepared from 4,475 kg of skim milk using each starter at a 2% inoculum level. Table 1 shows cheese making results.

**Table 1. Cottage Cheese results**

| Parameter | Bulk Starter A | Bulk Starter B | Bulk Starter C |
|---|---|---|---|
| Curd yield (kg) | 1,161 | 1,187 | 1,211 |
| Wt increase over Bulk Starter A | Control | 2.18 % | 4.21 % |
| Curd texture | Control | Firmer than A | Firmer than A |
| Flavor | Good | Good | Good |

It is seen that the use of potato starch results in a weight increase of the cheese, whereas the curd texture is firmer. This effect is even stronger when the particle size is reduced.

## Claims

1. Process comprising the step of growing a starter culture of lactic acid bacteria in a liquid medium, comprising buffer salts, **characterized in that** the liquid medium comprises potato starch at a concentration from 10 to 120 g/liter.

2. Process according to claim 1, **characterized in that** the starch is gelatinized.

3. Process according to any one of the claims 1-2, **characterized in that** the starch has a mean particle size of less than 300 µm, preferably of less than 200 µm.

4. Process according to any one of the claims 1-3, **characterized in that** growing is performed in the absence of mechanical agitation.

5. Process for the production of cheese, the process comprising the steps of:
(i) growing a starter culture in a process according to any one of claims 1 to 4,
(ii) adding the bulk starter culture obtained in step (i) to milk, preferably in an amount such that the concentration of starch in the milk is at least 0.01 wt.%,
(iii) processing the obtained milk into cheese.

6. Process according to claim 5, further comprising the step of adding phosphate and/or divalent cations to the milk.

7. Process according to any one of the claims 5-6, **characterized in that** the potato starch, comprises a phosphate group.

8. Process according to any one of the claims 5-7, **characterized in that** the cheese has a moisture content of at least 40 wt.%, for instance between 40 and 60 wt.%

9. A composition comprising a bulk starter culture, potato starch at a concentration from 10 to 120 g/liter, and pH-controlling buffer salts **characterized in that** the starch has a mean particle size of less than 300 µm, preferably of less than 200 µm.

## Patentansprüche

1. Verfahren, bei dem man in einem Schritt eine Starterkultur von Milchsäurebakterien in einem flüssigen Medium züchtet, das Puffersalze umfasst, **dadurch gekennzeichnet, dass** das flüssige Medium Kartoffelstärke in einer Konzentration von 10 bis 120 g/l umfasst.

2. Verfahren nach Anspruch 1, **dadurch gekennzeichnet, dass** die Stärke gelatinisiert ist.

3. Verfahren nach einem der Ansprüche 1-2, **dadurch gekennzeichnet, dass** die Stärke eine mittlere Teilchengröße von weniger als 300 µm, vorzugsweise von weniger als 200 µm aufweist.

4. Verfahren nach einem der Ansprüche 1-3, **dadurch gekennzeichnet, dass** das Züchten in Abwesenheit von mechanischem Rühren durchgeführt wird.

5. Verfahren zur Herstellung von Käse, wobei das Verfahren die folgenden Schritte umfasst:
(i) Züchten einer Starterkultur in einem Verfahren nach einem der Ansprüche 1 bis 4,
(ii) Zugeben der gesamten in Schritt (i) erhaltenen Starterkultur zu Milch, vorzugsweise in einer solchen Menge, dass die Konzentration an Stärke in der Milch mindestens 0,01 Gew.-% beträgt,
(iii) Verarbeiten der erhaltenen Milch zu Käse.

6. Verfahren nach Anspruch 5, bei dem man zudem in einem Schritt Phosphat und/oder zweiwertige Kationen zu der Milch zugibt.

7. Verfahren nach einem der Ansprüche 5-6, **dadurch gekennzeichnet, dass** die Kartoffelstärke eine Phosphatgruppe umfasst.

8. Verfahren nach einem der Ansprüche 5-7, **dadurch gekennzeichnet, dass** der Käse einen Feuchtigkeitsgehalt von mindestens 40 Gew.-%, zum Beispiel zwischen 40 und 60 Gew.-%, aufweist.

9. Zusammensetzung, umfassend eine gesamte Starterkultur, Kartoffelstärke in einer Konzentration von 10 bis 120 g/l und pH-regulierende Puffersalze, **dadurch gekennzeichnet, dass** die Stärke eine mittlere Teilchengröße von weniger als 300 µm, vorzugsweise von weniger als 200 µm besitzt.

## Revendications

1. Procédé comprenant l'étape consistant à cultiver une culture starter de bactéries lactiques dans un milieu liquide, comprenant des sels tampons, **caractérisé en ce que** le milieu liquide comprend de l'amidon de pomme de terre selon une concentration allant de 10 à 120 g/litre.

2. Procédé selon la revendication 1, **caractérisé en ce que** l'amidon est gélatinisé.

3. Procédé selon l'une quelconque des revendications 1-2, **caractérisé en ce que** l'amidon possède une taille de particules moyenne inférieure à 300 µm, préférablement inférieure à 200 µm.

4. Procédé selon l'une quelconque des revendications 1-3, **caractérisé en ce que** la culture est effectuée en l'absence d'agitation mécanique.

5. Procédé de production de fromage, le procédé comprenant les étapes consistant à :
(i) cultiver une culture starter dans un procédé selon l'une quelconque des revendications 1 à 4,
(ii) ajouter la culture starter en vrac obtenue dans l'étape (i) à du lait, préférablement selon une quantité telle que la concentration de l'amidon dans le lait est d'au moins 0,01% en poids,
(iii) transformer le lait obtenu en fromage.

6. Procédé selon la revendication 5, comprenant en outre l'étape consistant à ajouter du phosphate et/ou des cations divalents au lait.

7. Procédé selon l'une quelconque des revendications 5-6, **caractérisé en ce que** l'amidon de pomme de terre comprend un groupement phosphate.

8. Procédé selon l'une quelconque des revendications 5-7, **caractérisé en ce que** le fromage possède une teneur en humidité d'au moins 40% en poids, par exemple entre 40 et 60% en poids.

9. Composition comprenant une culture starter en vrac, de l'amidon de pomme de terre selon une concentration allant de 10 à 120 g/litre, et des sels tampons de contrôle du pH, **caractérisée en ce que** l'amidon possède une taille de particules moyenne inférieure à 300 µm, préférablement inférieure à 200 µm.
